# EUROPEAN PATENT SPECIFICATION

(11) **EP 3 773 000 B1**
(45) Date of publication and mention of the grant of the patent: **29.01.2025**
(21) Application number: 19713085.9
(22) Date of filing: 01.04.2019
(51) Int. Cl.: A23L 23/10, A23L 27/40, A23L 33/16, A23P 10/20, A23P 10/25, A23P 10/28, A23P 30/10, A23L 29/00, A23L 29/231, A23L 29/262, A23L 33/22

(54) **PROCESS FOR PREPARING A BOUILLON TABLET**
VERFAHREN ZUR HERSTELLUNG EINER BOUILLONTABLETTE
PROCÉDÉ DE PRÉPARATION D'UN CUBE DE BOUILLON

(30) Priority: 06.04.2018 EP 18166011
(43) Date of publication of application: 17.02.2021
(73) Proprietor: Société des Produits Nestlé S.A., 1800 Vevey (CH)
(72) Inventor: BOBE, Ulrich, 78247 Hilzingen (DE); SCHROEDER, Volker, 88633 Heiligenberg (DE); GADDIPATI, Sanyasi, Beachwood, OH 44122 (US); PERDANA, Jimmy, 78224 Singen (DE); KIM, Youngbin, 73525 Schwäbisch Gmünd (DE); KEHLENBECK, Volker, 78351 Bodman-Ludwigshafen (DE); BOZON, Annabel, Sheffield S10 2QA (GB)
(74) Representative: Dinger, Hansjörg
(86) International application number: PCT/EP2019/058183
(87) International publication number: WO 2019/192959

(56) References cited:
- EP-A1- 1 708 579
- EP-A1- 2 773 225
- WO-A1-2007/085609
- WO-A1-2012/080063
- WO-A1-2017/171553
- KR-A- 20170 024 207
- US-A- 5 034 378
- US-A1- 2014 017 369
- DATABASE WPI Week 200658, 8 June 2005 Derwent World Patents Index; AN 2006-565964, XP002782942

## Description

### Field of the Invention

The present invention relates to a process for preparing a bouillon tablet. The process comprises a co-processed salt-fiber mass and mixing said co-processed salt-fiber mass with at least one further ingredient selected from the group consisting of salt, sugar, MSG, flavourings, fillers, oil, fat, or any combination thereof to result in a dry mass and pressing the dry mass into a tablet and packaging the tablet.

### Background of the Invention

A bouillon tablet formed by compressing ingredients into a tablet shape, for example a cube, is widely used as a concentrate to prepare a bouillon, a broth or a soup. The bouillon tablet is normally added to a hot aqueous solution, allowing it to dissolve. In addition, a bouillon tablet may be used when preparing other dishes, as a seasoning product. The dissolution time of bouillon tablets highly depends on its degree of compaction which can be measured / expressed by the hardness of such a product. The reason to compact powders in a regular form presents several advantages for the commercialisation (e.g. reduction of volume, optimisation of packaging material usage, shelf life and convenience). A habit developed by users of bouillon tablets is the crumbling of the tablet or cube into the dish during preparation process either to ensure good distribution and or to accelerate its dissolution time in the cooking water. This crumbliness is one of the attributes that needs to be ensured during shelf life and therefore a post-hardening of the tablet or cube has to be avoided. A minimum hardness is necessary to allow a wrapping of the tablet. A maximum hardness ensures that a normal user can break the tablet within fingers without the use of additional tools or appliances. A typical bouillon tablet or bouillon cube comprises salts, taste enhancing compounds like monosodium glutamate (MSG), sugars, starch or flour, fat, flavouring components, vegetables, meat extracts, spices, colourants etc. The amounts of the respective compounds may vary depending on the specific purpose of the product, the market or taste of the consumer that is aimed at.

A conventional way of manufacturing bouillon tablets comprises mixing powdered bouillon components with fat and pressing the mix into a tablet. In this type of bouillon tablet the fat is the main ingredient holding the structure together.

Nowadays there is a nutritional trend to avoid or at least reduce the consumption of fats rich in saturated fatty acids and to preferably consume oils rich in monounsaturated fatty acids and/or polyunsaturated fatty acids. WO2004/049831 describes how it is possible to have very little solid fat entrapped in a hard bouillon tablet provided the tablet also comprises crystals, a filler and a sticking agent. The sticking agent may comprise ingredients the addition of which (combined with an adequate increase of the water activity) impart a glass transition temperature to the final mixture which may be relatively easily exceeded during tableting. Such ingredients include meat extract, processed flavours and/or vegetables extracts.

Sticking agents used to bind together bouillon cubes with low fat contents are typically hygroscopic amorphous ingredients. These are activated in the bouillon mixture by the addition of water. This process of water addition can be problematic, for example it is difficult to ensure homogenous distribution of the water and a storage time up to 24 hours is needed to reach a water activity equilibrium. Crust formation may occur which requires stopping the mixer for cleaning. Sometimes lumps are formed in the mixtures which causes quality defects in the finished pressed tablets. In addition post hardening of the bouillon tablet may occur.

WO2007/085609 discloses a bouillon and/or seasoning tablet, which comprises 0.5 to 10wt% oil and/or 0 to 5wt% fat, binders, salt, between 2 and 3wt% of total water, and between 0.5 to 8wt% of cereal, vegetable or fruit fibers. The fibers are wetted with a saturated water/salt solution and afterwards the wetted fibers are mixed with all the other ingredients and the obtained mixture is mixed.

US2014/017369 discloses a method for manufacturing a soup compact. The method describes compressing a soup powder, moistening the compressed soup powder and afterwards drying. Through the moistening and drying a very thin layer of crust is formed.

EP2773225 discloses a shaped solid food concentrate comprising 35-85% by weight crystalline ingredients composed of at least one of salt, monosodium glutamate and sugar, 0.1-10% by weight gelatinized starch, 0.2-20% by weight water; and 0-50% by weight of taste imparting components.

US5034378 disclosed a food flavor enhancer composition which may be comprised of a variety or any one of edible salts including sodium chloride, potassium chloride, monosodium glutamate, flavor potentiators and at least one variety of soluble dietary fibers which is preferably decomplexed is specified.

Hence, there is a persisting need in the art to find improved processes for forming bouillon tablets, especially bouillon tablets which use a new binding system despite the well-known binding system of amorphous binding and/or fat binding.

### Summary of the invention

An object of the present invention is to improve the state of the art and to provide an improved solution to overcome at least some of the inconveniences described above or at least to provide a useful alternative. The object of the present invention is achieved by the subject matter of the independent claims. The dependent claims further develop the idea of the present invention.

Accordingly, the present invention provides in a first aspect a process for the production of a bouillon tablet comprising salt and fibers, the process comprising the steps of:
a) dissolving the salt or part of the salt in water;
b) mixing the fibers and the water before, during or after dissolution of the salt or part of the salt in water;
c) drying the mixture of step b) to obtain a dry salt-fiber mass;
d) milling the dry salt-fiber mass;
e) mixing the dry salt-fiber mass with at least one further ingredient selected from the group consisting of salt, sugar, MSG, flavourings, filler, colourants, oil, fat, or any combination thereof, to result in a dry composition;
f) pressing the dry composition to a bouillon tablet;
wherein the salt is dissolved in the water at a ratio between 1:2.8 to 1:20; and wherein the drying is done at a temperature between 65 to 120°C; and wherein the bouillon tablet comprises at least 10wt% salt-fiber mass; and wherein the salt-fiber mass comprises 10 to 90wt% salt and 10 to 90wt% fibers.

It has been surprisingly found by the inventors that using a co-processed salt-fiber mass has very good flow-ability values and provides an efficient new binding system in a bouillon tablet.

The use of the salt-fiber mass increases the hardness of bouillon tablets/cubes after pressing. The obtained hardness can exceed the hardness that is commonly observed during pressing of bouillon cubes/tablets. At the same time, the produced bouillon products can still be crumbled. So far, such a behaviour has not been observed for comparable hardness values. This strongly indicates that a different and new binding mechanism is present. Due to this, cubes/tablets can be easily produced (high hardness advantageous for manufacturing) but at the same time show good crumbliness. Crumbliness is a key Driver of liking for consumers and is thus desired. In addition the bouillon tablets/cubes has a faster dissolution time compared to standard bouillon tablets/cubes. This is very surprising as due to the higher hardness a slower dissolution time is expected.

In addition the salt-fiber mass is used to produce bouillon cubes with reduced salt content (e.g. between 10 to 50% reduction). It was surprisingly found that cubes/tablets could be pressed even though a high fibre content was used (fibres are elastic and can lead to capping/breakage after pressing). This behaviour might be explained by the entrapment of salt in fibers. It enables the use of higher contents of fibers in applications. It should also be mentioned that the flow-ability is positively influenced by using the salt-fiber mass compared to pure fibres.

### Detailed Description of the invention

Consequently the present invention relates to a process for the production of a bouillon tablet comprising salt and fibers, the process comprising the steps of:
a) dissolving the salt or part of the salt in water;
b) mixing the fibers and the water before, during or after dissolution of the salt or part of the salt in water;
c) drying the mixture of step b) to obtain a dry salt-fiber mass;
d) milling the dry salt-fiber mass;
e) mixing the dry salt-fiber mass with at least one further ingredient selected from the group consisting of salt, sugar, MSG, flavourings, colourants, fillers, oil, fat, or any combination thereof, to result in a dry composition;
f) pressing the dry composition to a bouillon tablet;
wherein the salt is dissolved in the water at a ratio between 1:2.8 to 1:20; and wherein the drying is done at a temperature between 65 to 120°C; and wherein the bouillon tablet comprises at least 10wt% salt-fiber mass; and wherein the salt-fiber mass comprises 10 to 90wt% salt and 10 to 90wt% fibers.

Embodiments relating to the bouillon tablet and its ingredients, are not encompassed by the wording of the claims, but are considered as useful for understanding the invention.

"Bouillon tablet" means a tablet obtained by pressing a free flowing powder into a tablet. The tablet may be any shape that can be formed in a tabletting press; many commercial bouillon tablets are cubes. Bouillon tablets are sometimes referred to as broth tablets, stock tablets or seasoning tablets. In a cube form, they are referred to as bouillon cubes, broth cubes, stock cubes or seasoning cubes.

"Salt" according to this invention means edible salts capable of imparting or enhancing a salty taste perception. Salt is selected from the group consisting of sodium chloride, potassium chloride, ammonium chloride or a combination thereof, more preferably sodium chloride. In a further embodiment, the bouillon tablet comprises salt in an amount in the range of 10 to 65% (by weight of the composition), preferably between 15 to 65%, preferably between 20 to 60%, preferably between 25 to 60%, preferably between 30 to 60%, preferably between 35 to 60%, preferably between 35 to 50%, preferably between 40 to 60%, preferably between 45 to 60%, preferably between 45 to 55%, preferably between 40 to 50% (by weight of the composition).

The term "dissolving" according to this invention means that salt is dissolved within water. In an embodiment salt is dissolved in water at a ratio between 1:2.8 to 1:20, preferably 1:2.8 to 1:20, preferably 1:2.8 to 1:15, preferably 1:2.8 to 1:10, preferably 1:2.8 to 1:6, preferably 1:3 to 1:20, preferably 1:3 to 1:15, preferably 1:3 to 1:10, preferably 1:3 to 1:6, preferably 1:4 to 1:20, preferably 1:4 to 1:15, preferably 1:4 to 1:10, preferably 1:4 to 1:6. In a preferred embodiment a saturated water-salt solution is obtained. In an embodiment the fibers and the water are mixed after dissolution of the salt or part of the salt in the water. The term "part of the salt" means that not the total amount of salt of the bouillon tablet is dissolved in water as salt can be also mixed as pure salt in the dry composition. At least 8% of the total amount of salt is dissolved in water, preferably at least 12%, preferably at least 20%, preferably at least 25%, preferably at least 30%, preferably at least 40%, preferably at least 50%, preferably at least 60%, preferably at least 75%, preferably at least 80%, preferably at least 90%, preferably between 8 to 100%, preferably between 12 to 100%, preferably between 20 to 100%, preferably between 30 to 100%, preferably between 40 to 100%, preferably between 50 to 100%, preferably between 75 to 100%, preferably 100% of the total amount of salt is dissolved in water.

In a further embodiment, the bouillon tablet comprises monosodium glutamate (MSG) in an amount in the range of 0 to 25% (by weight of the composition), preferably between 0 to 15%, preferably between 0.5 to 25%, preferably between 0.5 to 15%, preferably example between 5 to 10% (by weight of the composition).

In a further embodiment, the bouillon tablet comprises sugar (for example sucrose) in an amount in the range of 0 to 20% (by weight of the composition), preferably between 0 to 15%, preferably between 0.5 to 15%, preferably between 5 to 15%, preferably between 2 to 10% (by weight of the composition). The sugar according to this invention is white sugar or brown sugar.

"Fibers" according to this invention are dietary fibers. Dietary fiber consists of the remnants of edible plant cells, polysaccharides, lignin and associated substances resistant to (hydrolysis) digestion by the alimentary enzymes of humans. The dietary fibers are from vegetables, fruits, cereal or combinations thereof. Dietary fibers are selected from at least one of carrot, beetroot, pumpkin, citrus, wheat, oat, bamboo, tomato, bell pepper, leek, ginger, onion, kale, parsnip, celery, cucumber, courgette, broccoli, kohlrabi, asparagus or combinations thereof, preferably carrot, beetroot, pumpkin, citrus, wheat, oat, bamboo, tomato or combinations thereof. The fibers or dietary fibers are in powdered form and have a particle size of from 5µm to 1000µm, preferably 5µm to 1000µm, preferably 5µm to 800µm, preferably 5µm to 700µm, preferably 5µm to 500µm, preferably 15µm to 1000µm, preferably 15µm to 700µm, preferably 15µm to 500µm, preferably 20µm to 500µm, preferably 50µm to 800µm, preferably 5µm to 500µm, preferably 75µm to 700µm, preferably 80µm to 500µm, preferably 100µm to 600µm, preferably 100µm to 500µm, preferably 250µm to 500µm. Particle size and particle size distribution may be measured by laser diffraction using a Malvern Mastersizer.

The term "flavourings" according to this invention means ingredients selected from the group consisting of yeast extract, vegetable powder, animal extract, bacterial extract, vegetable extract, animal powder, reaction flavour, hydrolysed plant protein, acid, garnishes, herbs, spices or combinations of these. The bouillon tablet according to the invention comprise 0 to 40 % flavourings, preferably 0.5 to 40 %, preferably 1 to 40 %, preferably 2 to 40 %, preferably 1 to 35 %, preferably 2 to 35 %, preferably 3 to 35 %, preferably 5 to 35 %, preferably 9 to 35 %, preferably 10 to 30 %, preferably 10 to 25 %, preferably 10 to 20 %, preferably 5 to 25 %, for further example 5 to 15 % (by weight of the composition). In an embodiment, the flavourings are selected from the group comprising yeast extract, chicken extract, onion powder, garlic powder, celery root powder, tomato powder, bacterial extract, reaction flavour or combinations of these. A bacterial extract is described within WO2009040150 or WO2010105842. A vegetable extract is described within WO2013092296. Vegetable powder means at least one ingredient of onion powder, garlic powder, tomato powder, celery root powder or a combination thereof. Garnishes, herbs, spices or a combination thereof are selected from the group comprising pieces of parsley, celery, fenugreek, lovage, rosemary, marjoram, dill, tarragon, coriander, ginger, lemongrass, curcuma, chili, ginger, paprika, mustard, garlic, onion, turmeric, tomato, coconut milk, cheese, oregano, thyme, basil, chillies, paprika, pimento, jalapeno pepper, white pepper powder and black pepper or combinations of these. Animal powder means at least one ingredient of meat powder, fish powder, crustacean powder or combination thereof. Meat powder means chicken powder or beef powder. Animal extract means at least one ingredient of meat extract, fish extract, crustacean extract or combination thereof.

In a further embodiment, the bouillon tablet comprises yeast extract in an amount in the range of 0 to 15 % (by weight of the composition), preferably between 1 to 15 %, preferably between 1 to 10 %, preferably between 1 to 7 %, for further example between 2 to 6 % (by weight of the composition). In a further embodiment, the bouillon tablet comprises vegetable powder in an amount in the range of 0 to 15 % (by weight of the composition), preferably between 0.1 to 15 %, preferably between 0.1 to 10 %, preferably between 1 to 10 %, for further example between 1 to 7 % (by weight of the composition). In a further embodiment, the bouillon tablet comprises animal extract in an amount in the range of 0 to 15 % (by weight of the composition), preferably between 0.1 to 15%, preferably between 0.1 to 10%, for further example between 0.1 to 5% (by weight of the composition). In a further embodiment, the bouillon tablet comprises bacterial extract in an amount in the range of 0 to 20 % (by weight of the composition), preferably between 0.1 to 20 %, preferably between 0.1 to 15 %, preferably between 0.1 to 10 %, preferably between 1 to 20 %, preferably between 1 to 10 %, preferably between 2 to 8 % (by weight of the composition). In a further embodiment, the bouillon tablet comprises vegetable extract in an amount in the range of 0 to 15% (by weight of the composition), preferably between 0.1 to 15%, preferably between 0.1 to 10%, preferably between 0.1 to 5 % (by weight of the composition). In a further embodiment, the bouillon tablet comprises meat powder, fish powder or crustacean powder in an amount in the range of 0 to 15 % (by weight of the composition), preferably between 0.1 to 15 %, preferably between 0.1 to 10 %, for further example between 0.1 to 5 % (by weight of the composition). In a further embodiment, the bouillon tablet comprises reaction flavour in an amount in the range of 0 to 15 % (by weight of the composition), preferably between 0.1 to 15 %, preferably between 0.1 to 10 %, for further example between 0.1 to 5 % (by weight of the composition). Reaction flavours may preferably be amino acids and reducing sugars which react together on the application of heat via the Maillard reaction. In a further embodiment, the bouillon tablet comprises hydrolysed plant protein in an amount in the range of 0 to 20 % (by weight of the composition), preferably between 0.1 to 20%, preferably between 0.1 to 15%, preferably between 0.1 to 10 %, preferably between 1 to 20 %, preferably between 1 to 15 %, preferably between 5 to 15 % (by weight of the composition). In a further embodiment, the bouillon tablet comprises chicken extract, beef extract, fish extract or crustacean extract in an amount in the range of 0 to 5 % (by weight of the composition), preferably between 0.5 to 5 %, for further example between 1 to 3 % (by weight of the composition). In a further embodiment, the bouillon tablet comprises onion powder in an amount in the range of 0 to 10 % (by weight of the composition), preferably between 0.1 to 10%, preferably between 0.1 to 5%, for further example between 1 to 5 % (by weight of the composition). In a further embodiment, the bouillon tablet comprises celery root powder in an amount in the range of 0 to 10 % (by weight of the composition), preferably between 0.1 to 10%, preferably between 0.1 to 5%, preferably between 1 to 5 % (by weight of the composition). In a further embodiment, the bouillon tablet comprises tomato powder in an amount in the range of 0 to 10% (by weight of the composition), preferably between 0.1 to 10%, preferably between 0.1 to 5%, for further example between 1 to 5 % (by weight of the composition). In a further embodiment, the bouillon tablet comprises acid in an amount in the range of 0 to 5% (by weight of the composition), preferably between 0.1 to 3%, for further example between 0.1 to 2% (by weight of the composition). Acid is citric acid, vinegar, vinegar powder or a combination thereof. In a further embodiment, the bouillon tablet comprises garnishes, herbs or spices or a combination thereof in an amount in the range of 0 to 25% (by weight of the composition), preferably between 0.1 to 25%, preferably between 0.1 to 20%, preferably between 0.1 to 15%, preferably between 0.1 to 10%, preferably between 1 to 10%, preferably between 0.1 to 5%, preferably between 1 to 5% (by weight of the composition).

In the context of the present invention, the term "fat" refers to triglycerides solid at a temperature of 20°C, preferably solid at a temperature of 25°C. The term "solid at a temperature of 20°C" means that the fat, stored at this temperature, maintains its shape. Fats and oils are the chief component of animal adipose tissue and many plant seeds. The fat according to this invention have a solid fat content greater than 2% at 30°C, preferably it have a solid fat content greater than 5% at a temperature of 30°C, preferably it have a solid fat content greater than 10% at a temperature of 30°C. The solid fat content of a fat for example be measured by pulsed NMR. Fat according to this invention means a vegetable and/or animal fat. In a further embodiment fat according to this invention means at least one ingredient of tropical fat, fractionated tropical fat, fractionated beef fat, fractionated chicken fat, algae fat or shea butter, interesterified shea butter. In a further embodiment, the bouillon tablet comprises fat in an amount of less than 14% (by weight of the composition), preferably less than 10%, preferably less than 7%, preferably in the range of 0 to 14% (by weight of the composition), preferably between 0.5 to 14%, preferably between 0.5 to 10%, preferably between 0.5 to 8%, preferably between 1 to 8%, preferably between 1 to 6%, preferably between 2 to 6% (by weight of the composition). Nowadays there is a nutritional trend to avoid or at least reduce consumption of fats rich in trans fatty acids and saturated fatty acids and to preferably consume healthy oils rich in polyunsaturated fatty acids. It is advantageous to provide a hard bouillon tablet which only or mainly contains oil that is liquid at ambient temperatures in local conditions and no or only little amounts of solid fat. In an embodiment, the bouillon tablet contains less than 5% saturated fat; preferably no fat (0 wt% fat).

In an embodiment, the bouillon tablet further comprises oil, for example up to 15% oil, for further example up to 10% oil, preferably the composition comprises oil in an amount in the range of 0 to 15% (by weight of the composition), preferably between 0.5 to 10% (by weight of the composition), preferably between 0.5 to 7%, preferably between 0.5 to 5%, preferably between 0.5 to 3% (by weight of the composition). In a preferred embodiment, the oil is a vegetable oil. Preferably, the oil is selected from the group consisting of sunflower oil, rape seed oil, cotton seed oil, peanut oil, soya oil, olive oil, coconut oil, algal oil, safflower oil, corn oil, rice bran oil, sesame oil, hazelnut oil, avocado oil, almond oil, walnut oil or a combination thereof; more preferably sunflower oil. The term sunflower oil includes also high oleic sunflower oil. In the context of the present invention the term "oil" refers to triglycerides which are liquid or pourable at a room temperature of 20°C, for example liquid or pourable at a room temperature of 25°C. The oil have a solid fat content of less than 10 % at 20 °C, preferably less than 5 % at 20 °C, preferably less than 2 % at 20 °C, preferably 0 % at 20 °C. The oil may be rich in monounsaturated and polyunsaturated fatty acids.

The term "filler" according to this invention means maltodextrin, glucose syrup, starch, flour or a combination thereof. In an embodiment, the bouillon tablet according to process of the invention comprises fillers in an amount in the range of 0 to 30% (by weight of the composition), preferably between 0.5 to 30% (by weight of the composition), preferably between 0.5 to 25%, preferably between 0.5 to 20%, preferably between 0.5 to 15%, preferably between 5 to 20%, preferably between 5 to 15%, preferably between 5 to 10% (by weight of the composition). In an embodiment, the bouillon tablet according to process of the invention comprises less than 10% maltodextrin and/or glucose syrup, preferably less than 5%, preferably less than 1% (by weight of the composition) for example it may be free from maltodextrin and/or glucose syrup. The bouillon tablet is free from maltodextrin. The bouillon tablet is free from glucose syrup. Replacing maltodextrin with humid native starch was found to decrease undesirable texture changes such as post-hardening. Maltodextrin, and to a lesser extent glucose syrup are not a common ingredients in domestic kitchens and so may be viewed with suspicion by some consumers. In this context, glucose syrup and maltodextrin are mixtures of D-glucose units connected in chains of variable length, produced from starch by hydrolysis. Glucose syrups and maltodextrins are classified by DE (dextrose equivalent). Typically maltodextrins have a DE between 3 and 20 while glucose syrups have a DE above 20. The term "starch" according to this invention means a native starch. Native starch is typically obtained from cereals and tubers by physical extraction, purification and drying of starch milk. The starch according to the invention is selected from the group consisting of maize, waxy maize, high amylose maize, wheat, tapioca, potato, cassava or combinations of these. The starch is selected from the group consisting of native wheat starch, native maize starch, native rice starch, native potato starch, native cassava starch and combinations of these. The starch according to the invention comprises between 3 and 25 % moisture by weight. For example the starch comprise between 4 and 22 % moisture by weight, preferably between 7 and 21 % moisture, preferably the starch comprise between 19 and 21 % moisture by weight (humid starch). In an embodiment, the humid native starch has a water activity of between 0.4 and 0.6 at 20 °C, preferably between 0.45 and 0.55 at 20 °C. Humid native starch of an appropriate moisture content may be obtained by blending humid and non-humid starches and allowing them to equilibrate. Humid native starches are often available commercially at a lower price than the dry native starch as water needs to be removed from starch in the manufacturing process, humid native starch being effectively a part-finished ingredient. In a further embodiment, the bouillon tablet comprises starch in an amount in the range of 0 to 20% (by weight of the composition), preferably between 0.1 to 20%, preferably between 0.1 to 15%, preferably between 0.1 to 10%, preferably between 1 to 10%, preferably between 3 to 10% (by weight of the composition). Flour according to this invention is wheat flour, cassava flour, corn flour or a combination thereof. In a further embodiment, the bouillon tablet comprises flour in an amount in the range of 0 to 20% (by weight of the composition), preferably between 0.1 to 20%, preferably between 0.1 to 15%, preferably between 0.1 to 10%, preferably between 1 to 10%, preferably between 3 to 10% (by weight of the composition).
"Salt-fiber mass" according to this invention is an aggregation of fibers, wherein the salt crystallizes in, on and through the aggregated fibers having a surface protrusion of salt with a particle size of salt between 0.5-50µm, preferably 0.5-30µm, preferably 0.5-10µm, preferably 1-50µm, preferably 1-30µm, preferably 1-10µm, preferably 1.5-50µm, preferably 1.5-30µm, preferably 1.5-10µm, preferably 2-50 µm, preferably 2-30µm, preferably 2-10µm. The salt-fiber mass is not hallow. The dry salt fiber-mass has particle size distribution with a median diameter Dv50 in the range of 50 to 1500µm, preferably in the range of 100 to 1500µm, preferably in the range of 150 to 1500µm, preferably in the range of 200 to 1500µm, preferably in the range of 200 to 1000µm, preferably in the range of 225 to 1000µm, preferably in the range of 225 to 800µm, preferably in the range of 250 to 800µm. In a further embodiment, the salt-fiber mass comprises 10 to 90% of salt (by weight of the salt-fiber mass) and 10 to 90% of fibers (by weight of the salt-fiber mass), preferable 15 to 85% of salt and 15 to 85% of fibers, preferable 18 to 82% of salt and 18 to 82% of fibers, preferable 20 to 80% of salt and 20 to 80% of fibers, preferable 25 to 75% of salt and 25 to 75% of fibers, preferable 30 to 70% of salt and 30 to 70% of fibers, preferable 50% of salt and 50% of fibers (by weight of the salt-fiber mass). In a further embodiment, the bouillon tablet comprises salt-fiber mass of at least 10% (by weight of the composition), preferably at least 15%, preferably at least 20%, preferably in an amount in the range of 10 to 100% (by weight of the composition), preferably between 10 to 90%, preferably between 10 to 80%, preferably between 10 to 70%, preferably between 15 to 100%, preferably between 15 to 90%, preferably between 15 to 75%, preferably between 20 to 100%, preferably between 20 to 90%, preferably between 20 to 80%, preferably between 20 to 75%, preferably between 20 to 70%, preferably between 25 to 100%, preferably between 20 to 70%, preferably between 25 to 65% (by weight of the composition). In a further embodiment, the salt-fiber mass does not contain added acid, added gum, added hydrocolloid or combination thereof. Gum according to this invention is xanthan gum, carrageenan, locust bean gum, agar, alginates, guar gum, arabic gum, gellan or combination thereof.

The particle size Dv50 is used in the conventional sense as the median of the particle size distribution. Median values are defined as the value where half of the population reside above this point, and half resides below this point. The Dv50 is the size in micrometer that splits the volume distribution with half above and half below this diameter. The particle size distribution may be measured by laser light scattering, microscopy or microscopy combined with image analysis. For example, the particle size distribution may be measured by laser light scattering. Since the primary result from laser diffraction is a volume distribution, the Dv50 cited is the volume median.

The drying step can be carried out by any commonly known drying technique such as air drying, oven drying, drum drying, vacuum drying, bed drying, microwave-vacuum drying, infrared radiation drying or combinations thereof. The drying step does not include spray drying. In an embodiment of the invention the drying is done at a temperature between 65 to 120°C, preferably between 65 to 100°C, preferably between 65 to 90°C, preferably between 65 to 80°C. Before drying the salt-fiber mass has a viscosity of at least 600mPa.s, preferably at least 800mPa.s, preferably at least 1000mPa.s. For spray drying a viscosity of below 350mPa.s is used. In the presence of particles in the slurry, further considerable reduction of the maximum viscosity in the spray drying feed is usually essential to avoid clogging of the spray dryer atomiser. Viscosity is measured with Rheometer at shear rate of 10 s⁻¹ using MCR300 rheometer with measuring cylinder CC27 and TEZ150P Peltier thermostatting unit (Anton Paar GmbH, Germany).

Milling according to this invention is a process that breaks solid materials into smaller pieces by grinding, crushing, or cutting. Milling can be carried out by any commonly known milling techniques such as roll mill, hammer mill, chopper mill, ball mill, SAG mil, rod mil or combinations thereof.

In a further embodiment "dry salt-fiber mass" according to this invention has a water activity below 0.35, preferably below 0.30, preferably between 0.1-0.35, preferably between 0.1-0.3. Wetted fiber has a water activity of at least 0.6, preferably at least 0.7.

"Flow-ability" means flow properties on how easily a powder flows. Flow-ability (*ff_{c}*) is quantified as the ratio of consolidation stress *σ*₁ to unconfined yield strength *σ_{c}* according to "Schulze, D. (2006). Flow properties of powders and bulk solids. Braunschweig/Wolfenbuttel, Germany: University of Applied Sciences." In an embodiment flow-ability (*ff_{c}*) of the dry salt-fiber mass is at least 2.5 at 23°C, preferably between the range of 2.5 to 20 at 23°C, preferably at least 3 at 23°C, preferably between the range of 3 to 15 at 23°C. In an embodiment flow-ability (*ff_{c}*) of the dry composition is at least 2.5 at 23°C, preferably between the range of 2.5 to 12 at 23°C, preferably between the range of 2.7 to 10 at 23°C, preferably at least 3 at 23°C, preferably between the range of 3 to 10 at 23°C, preferably between the range of 3.2 to 10 at 23°C, preferably between the range of 3.2 to 7 at 23°C. Flow-ability was measured using a Schulze Ring Shear Tester RST-01.pc according to ASTM D6467. Flow-ability measurements were carried out with pre-shear normal stress set to 2600 Pa and shear normal stress to 390, 1235, and 2080 Pa.

In an embodiment the bouillon tablet is shelf-stable over 12 months and therefore has a water activity of below 0.55, preferably between 0.10 to 0.55.

In an embodiment, the bouillon tablet has a tablet hardness of at least 90 N, preferably at least 95N, preferably at least 100N, preferably at least 110N, preferably at least 120N, preferably between 90 to 700N, preferably between 90 to 500N, preferably between 90 to 300N, preferably between 100 to 700N, preferably between 100 to 500N, preferably between 100 to 300N. If

Those skilled in the art will understand that they can freely combine all features of the present invention disclosed herein. In particular, features described for different embodiments of the present invention may be combined.

### Examples

### Example 1: Process

The general procedure for preparing powders with improved bulking and tabletting properties of the invention is as follows:
1. Dissolving salt ingredients in water
2. Add fiber to the solution obtained from step 1.
3. Followed by mixing
4. Drying
5. Milling (optional)

Water was placed in Thermomix TM5 (Vorwerk &Co. KG, Germany). Salt powder was weighed in PG5002S balance (Mettler-Toledo GmbH, Switzerland) and added to Thermomix. Mixing was carried out at speed setting of 3 for 3 minute at room temperature until all salt crystals were dissolved. Fiber was weighed in PG5002S balance (Mettler-Toledo GmbH, Switzerland) and added to Thermomix. Mixing was again carried out at speed setting of 3 for 3 minute at room temperature until all fiber were wetted and slurry was obtained. The slurry was then spread onto a baking pan; slurry thickness was maintained between 5 and 10 mm, then dried in Rational Self Cooking Centre Electric Combination Oven SCC202E (Rational AG, Germany). Drying was carried out for 12 h at 70 °C with 30% fan speed. The resulting cake was milled with FREWITT mill with sieve mesh size of 2 mm.

### Pressing of bouillon tablet/cube

Pressing of bouillon cube was carried out with Flexitab Tablet Pressing equipment (Röltgen GmbH, Germany). Approximately 3 gram of bouillon powder was fed to tableting mould (14 mm in length and 14 mm in width) and pressed with force between 5.0 and 6.0 kN.

### Hardness measurement of tablet/cube

Hardness measurement was carried out using Texture Analyser TA-HDplus (Stable Micro System, UK) equipped with 250 kg load cell and P/75 compression platen. Texture Analyser test mode was set to "Compression" with pre-test speed of 1 mm/s, test speed of 0.5 mm/s, post-test speed of 10 mm/s, target mode of "Distance", distance of 4 mm, halt time was set to "No", way back of 10 mm, trigger type to "Auto(Force), and trigger force of 50 gram. Hardness is measured not in the orientation where the tablet/cube were originally pressed in Flexitab; but from the side. Hardness measurement was carried out in 10 replication.

### Example 2-4: Comp. Process

In case the fiber and salts are dry-mixed (without any further processing step), the resulting mixes cannot be tableted upon compaction using our tableting system.

| | Comp Ex. 2 | Comp. Ex 3 | Comp. Ex. 4 |
|---|---|---|---|
| Fiber type | Carrot fiber | Wheat fiber | Citrus fiber |
| Fiber [gram] | 50 | 50 | 50 |
| Salt NaCl [gram] | 50 | 50 | 50 |
| Water activity [-] | 0,27 | 0,27 | 0,26 |
| Tablet hardness | n.a. | n.a. | n.a. |
| Remarks | Remain powder upon compaction | Remain powder upon compaction | Remain powder upon compaction |

### Example 5-7: Comp. Process

Comp. examples 5 to 7 were processed according to the process of example 1 by replacing a salt-water solution with pure water. The resulting dry mixes cannot be tableted upon compaction and remain as powder using our tableting system. This means, that fibers have been mixed with pure water only and dried again. The resulting fibers have been mixed with dry salt (no salt-water solution) and the resulting dry mixes cannot be tableted upon compaction and remain as powder using our tableting system. This shows, that a compaction can only be achieved with the process of our invention (fibers added to a water-salt solution, further mixed and afterwards dried the resulting mixes can be tableted upon compaction using our tableting system).

| | Comp Ex. 5 | Comp. Ex 6 | Comp. Ex. 7 |
|---|---|---|---|
| Fiber type | Carrot fiber | Wheat fiber | Citrus fiber |
| Fiber [gram] | 50 | 50 | 50 |
| Salt NaCl [gram] | 50 | 50 | 50 |
| Water [gram] | 200 | 200 | 200 |
| Water activity [-] | 0,27 | 0,27 | 0,26 |
| FFC at 23 °C | 2.3 | - | - |
| Tablet hardness | n.a. | n.a. | n.a. |
| Remarks | Remain powder upon compaction | Remain powder upon compaction | Remain powder upon compaction |

### Examples 8-10: Different origin of fiber

Different kind of fibers have been tested according to the process of example 1. In case the fiber has been added to a water-salt solution, further mixed and afterwards dried the resulting mixes can be tableted upon compaction using our tableting system.

| | Ex. 8 | Ex. 9 | Ex. 10 |
|---|---|---|---|
| Fiber type | Carrot fiber | Wheat fiber | Citrus fiber |
| Fiber [gram] | 50 | 50 | 50 |
| Salt NaCl [gram] | 50 | 50 | 50 |
| Water [gram] | 200 | 200 | 200 |
| Water activity [-] | 0,28 | 0,26 | 0,27 |
| FFC at 23 °C | 10.8 | - | - |
| Tablet hardness [N] | 1005 | 943 | 2320 |
| Remarks | Good tablet, sharp (not brittle) edge, good crumbliness | Good tablet, sharp (not brittle) edge, good crumbliness | Good tablet, sharp (not brittle) edge, good crumbliness |

Within example 8 it is shown that the flow-ability of the dry salt-fiber mass has a value of 10.8 and is much higher as shown within comparison example 5 having only a flow-ability value of 2.3.

The dissolution time of the tablet of example 8 is only 16 sec. This is surprising as the tablet is much harder compared to a normal bouillon tablet of approximately 150-200N and a dissolution time between 30-45 sec.

### Examples 11-14: Different ratio fiber-salt

Different fiber-salt ratios have been tested according to the process of example 1.

Comparative example 11 shows the result if pure salt is used. Comparative example 14 shows the result if only fibers are mixed with pure water (without water-salt solution) dried and pressed afterwards. This shows, that a compaction can only be achieved with the process of our invention (fibers added to a water-salt solution, further mixed and afterwards dried the resulting mixes can be tableted upon compaction using our tableting system).

| | Comp Ex. 11 | Ex. 12 | Ex. 13 | Comp. Ex. 14 |
|---|---|---|---|---|
| Carrot fiber [gram] | 0 | 20 | 80 | 100 |
| Salt NaCl [gram] | 100 | 80 | 20 | 0 |
| Water [gram] | n.a. | 200 | 200 | 200 |
| Water activity [-] | n.a. | 0,29 | 0,24 | 0,27 |
| Tablet hardness [N] | 17 | 916 | 506 | 167 |
| Remarks | Tablet disintegrate readily | good crumbliness | good crumbliness | |

### Examples 15-16: Different ratio of water

| | Ex. 15 | Ex. 16 |
|---|---|---|
| Carrot fiber [gram] | 50 | 50 |
| Salt NaCl [gram] | 50 | 50 |
| Water [gram] | 400 | 700 |
| Water activity [-] | 0,25 | 0,27 |
| Tablet hardness [N] | 969 | 849 |

The minimum of ration of salt to water is 1:2.8 to obtain a saturated water-salt-solution. Examples 15 and 16 shows that higher amount of water can be used without having a significant influence on the obtained salt-fiber mass and obtained hardness. During the drying step a saturated water-salt-solution will be obtained anyway.

### Example 17: Different salt origin

| | Ex. 17 |
|---|---|
| Carrot fiber [gram] | 50 |
| Salt KCI [gram] | 50 |
| Water [gram] | 250 |
| Water activity [-] | 0,30 |
| Tablet hardness [N] | 720 |
| Remarks | Similar behaviour to NaCl |

### Examples 18-27: Application in bouillon cubes

### Preparation of bouillon powder

All bouillon powder ingredients were weighted in PG5002S balance (Mettler-Toledo, USA) and then mixed in Thermomix TM5 (Vorwerk &Co. KG, Germany). Mixing was carried out at speed setting of 3 for 30 s with propeller rotation was set to reverse direction. The resulting powder was then stored in a climate chamber ICH-110 (Memmert GmbH, Germany) at 25 °C with 48 % relative humidity with fan speed of 40 % for 24 h at prior to pressing.

### Water activity measurement

Water activity was measured with Hygrolab HC2-aw-USB (Rotronic AG, Switzerland) connected to PC with HW4-P-QUICK-Vx software (Rotronic AG, Switzerland). Measurement were carried out at 25.0 ±0.5 °C according to AOAC 978.18-1978, Water activity of canned vegetables.

### Flow-ability

Flow-ability was measured using a Schulze Ring Shear Tester RST-01 .pc according to ASTM D6467. Flow-ability measurements were carried out with pre-shear normal stress set to 2600 Pa and shear normal stress to 390, 1235, and 2080 Pa.

### Pressing of bouillon tablet/cube and hardness measurement of tablet/cube

Pressing of bouillon cube and hardness measurement was carried out as described above.

| **Recipe** | **Comp. Ex. 18** | **Comp. Ex. 19** |
|---|---|---|
| Salt [g] | 58 | 29 |
| Carrot fiber [g] | 0 | 29 |
| Sugar [g] | 11 | 11 |
| MSG [g] | 9 | 9 |
| Native potato starch [g] | 8 | 8 |
| Flavour [g] | 9 | 9 |
| Oil [g] | 4 | 4 |
| Spices [g] | 1 | 1 |
| FFC at 23 °C | 2,6 | 2,2 |
| Water activity [-] | 0,48 | 0,49 |
| Average Hardness [N] | 74 | 58 |
| Tablet breakage [%] | 10 | 45 |

| **Recipe** | **Ex. 20** | **Ex. 21** | **Ex. 22** | **Ex. 23** |
|---|---|---|---|---|
| Salt [g] | 0 | 0 | 0 | 0 |
| Sugar [g] | 11 | 11 | 11 | 11 |
| MSG [g] | 9 | 9 | 9 | 9 |
| Native potato starch [g] | 8 | 8 | 8 | 8 |
| Flavour [g] | 9 | 9 | 9 | 9 |
| Oil [g] | 4 | 4 | 4 | 4 |
| Spices [g] | 1 | 1 | 1 | 1 |
| Co processed carrot fiber-salt [g] | 58 | 58 | 58 | 58 |
| Ratio of carrot fiber : salt [wt%] | 20:80 | 50:50 | 80:20 | 90:10 |
| FFC at 23 °C | 3,6 | 3,5 | 3,2 | 2,7 |
| Water activity | 0,48 | 0,49 | 0,47 | 0,47 |
| Average Hardness [N] | 248 | 249 | 113 | 97 |
| Tablet breakage [%] | <2 | <2 | <3 | 4 |

| **Recipe** | **Ex. 24** | **Ex. 25** | **Ex. 26** | **Ex. 27** |
|---|---|---|---|---|
| Salt [g] | 29 | 29 | 29 | 46 |
| Sugar [g] | 11 | 11 | 11 | 11 |
| MSG [g] | 9 | 9 | 9 | 9 |
| Native potato starch [g] | 8 | 8 | 8 | 8 |
| Flavour [g] | 9 | 9 | 9 | 9 |
| Oil [g] | 4 | 4 | 4 | 0 |
| Palm fat [g] | 0 | 0 | 0 | 6 |
| Spices [g] | 1 | 1 | 1 | 1 |
| Co processed carrot fiber-salt [g] | 29 | 29 | 29 | 10 |
| Ratio of carrot fiber : salt [wt%] | 20:80 | 50:50 | 80:20 | 50:50 |
| FFC at 23 °C | 3,7 | 3,7 | 3,5 | 3,3 |
| Water activity | 0,48 | 0,48 | 0,49 | 0,43 |
| Average Hardness [N] | 120 | 113 | 96 | 103 |
| Tablet breakage [%] | <2 | <2 | 4 | <3 |

Comparative example 18 shows a tablet using pure salt without using a co-processed salt-fiber mass. Comparative example 19 shows a tablet using a dry mix of salt and fiber without using a co-processed salt-fiber mass. Compared to pure salt the hardness of the tablet is reduced by using a dry fiber-salt mix instead of pure salt. Example 21 shows the effect of a co-processed salt-fiber mass according to the invention compared to comparison example 19 using only a dry mix of salt and fiber without using a co-processed salt-fiber mass. The flowability of the bouillon powder is higher and the tablet hardness is much higher, which shows that the co-processed salt-fiber mass according to the invention leads to a new binding system. Example 20 to 27 shows that the invention works at different salt-fiber ratios and different amount of the salt-fiber-mass. All tablets from examples 20 to 27 have a good crumbliness. Examples 24 to 27 have in addition to the co-processed salt-fiber mass providing the binding of the bouillon tablet also standard sodium chloride in the recipe.

## Claims

1. A process for the production of a bouillon tablet comprising salt and fibers, the process comprising the steps of:
a) dissolving the salt or part of the salt in water;
b) mixing the fibers and the water before, during or after dissolution of the salt or part of the salt in water;
c) drying the mixture of step b) to obtain a dry salt-fiber mass;
d) milling the dry salt-fiber mass;
e) mixing the dry salt-fiber mass with at least one further ingredient selected from the group consisting of salt, sugar, MSG, flavourings, colourants, fillers, oil, fat, or any combination thereof, to result in a dry composition;
f) pressing the dry composition to a bouillon tablet;
wherein the salt is dissolved in the water at a ratio between 1:2.8 to 1:20; and wherein the drying is done at a temperature between 65 to 120°C; and wherein the bouillon tablet comprises at least 10wt% salt-fiber mass; and
wherein the salt-fiber mass comprises 10 to 90wt% salt and 10 to 90wt% fibers.

2. A process for the production of a bouillon tablet as claimed in claim 1, wherein the fiber is a dietary fiber.

3. A process for the production of a bouillon tablet as claimed in any one of claims 1 to 2, wherein the fiber is selected from at least one of carrot, beetroot, pumpkin, citrus, wheat, oat, bamboo, tomato, bell pepper, leek, ginger, onion, kale, parsnip, celery, cucumber, courgette, broccoli, kohlrabi, asparagus or combinations thereof.

4. A process for the production of a bouillon tablet as claimed in any one of claims 1 to 3, wherein the bouillon tablet comprises between 10 to 65wt% of the salt.

5. A process for the production of a bouillon tablet as claimed in any one of claims 1 to 4, wherein part of the salt in step a) is at least 8wt% of the total amount of salt comprised in the bouillon tablet, preferably at least 12wt%.

6. A process for the production of a bouillon tablet as claimed in any one of claims 1 to 5, wherein the fibers of step b) are mixed after dissolution of the salt in the water.

7. A process for the production of a bouillon tablet as claimed in any one of claims 1 to 6, wherein the salt-fiber mass comprises 20 to 80wt% salt and 20 to 80wt% fibers.

8. A process for the production of a bouillon tablet as claimed in any one of claims 1 to 7, wherein the bouillon tablet comprises between 20 to 75wt% of the salt-fiber mass.

9. A process for the production of a bouillon tablet as claimed in any one of claims 1 to 8, wherein the drying is done by oven drying, air drying, drum drying, vacuum drying, bed drying, microwave-vacuum drying, infrared radiation drying or combinations thereof.

10. A process for the production of a bouillon tablet as claimed in any one of claims 1 to 9, wherein the dry composition has a flow-ability of at least 2.5 at 23°C and wherein the flow-ability was measured using a Schulze Ring Shear Tester RST-01.pc according to ASTM D6467 with pre-shear normal stress set to 2600 Pa and shear normal stress to 390, 1235, and 2080 Pa.

11. A process for the production of a bouillon tablet as claimed in any one of claims 1 to 10, wherein the bouillon tablet has a tablet hardness of at least 90N and wherein the hardness measurement was carried out using Texture Analyser TA-HDplus equipped with 250 kg load cell and P/75 compression platen.

## Patentansprüche

1. Verfahren für die Herstellung einer Bouillontablette, umfassend Salz und Fasern, das Verfahren umfassend die Schritte:
a) Auflösen des Salzes oder eines Teils des Salzes in Wasser;
b) Mischen der Fasern und des Wassers vor, während oder nach einer Auflösung des Salzes oder eines Teils des Salzes in Wasser;
c) Trocknen der Mischung von Schritt b), um eine trockene Salzfasermasse zu erhalten;
d) Mahlen der trockenen Salzfasermasse;
e) Mischen der trockenen Salzfasermasse mit mindestens einer weiteren Zutat, die aus der Gruppe ausgewählt ist, bestehend aus Salz, Zucker, MSG, Aromen, Farbstoffen, Füllstoffen, Öl, Fett oder einer beliebigen Kombination davon, um eine trockene Zusammensetzung zu ergeben;
f) Pressen der trockenen Zusammensetzung zu einer Bouillontablette;
wobei das Salz in einem Verhältnis zwischen 1 : 2,8 und 1 : 20 in dem Wasser aufgelöst wird; und wobei das Trocknen bei einer Temperatur zwischen 65 und 120 °C erfolgt; und wobei die Bouillontablette zu mindestens 10 Gew.-% die Salzfasermasse umfasst; und
wobei die Salzfasermasse zu 10 bis 90 Gew.-% Salz und zu 10 bis 90 Gew.-% Fasern umfasst.

2. Verfahren für die Herstellung einer Bouillontablette nach Anspruch 1, wobei die Faser ein Ballaststoff ist.

3. Verfahren für die Herstellung einer Bouillontablette nach einem der Ansprüche 1 bis 2, wobei die Faser aus mindestens einem von Karotte, Rote Bete, Kürbis, Zitrusfrucht, Weizen, Hafer, Bambus, Tomate, Paprika, Lauch, Ingwer, Zwiebel, Grünkohl, Pastinake, Sellerie, Gurke, Zucchini, Brokkoli, Kohlrabi, Spargel oder Kombinationen davon ausgewählt ist.

4. Verfahren für die Herstellung einer Bouillontablette nach einem der Ansprüche 1 bis 3, wobei die Bouillontablette zu zwischen 10 und 65 Gew.-% das Salz umfasst.

5. Verfahren für die Herstellung einer Bouillontablette nach einem der Ansprüche 1 bis 4, wobei ein Teil des Salzes in Schritt a) mindestens 8 Gew.-% der Gesamtsalzmenge, die in der Bouillontablette umfasst ist, vorzugsweise mindestens 12 Gew.-%, beträgt.

6. Verfahren für die Herstellung einer Bouillontablette nach einem der Ansprüche 1 bis 5, wobei die Fasern von Schritt b) nach der Auflösung des Salzes in dem Wasser gemischt werden.

7. Verfahren für die Herstellung einer Bouillontablette nach einem der Ansprüche 1 bis 6, wobei die Salzfasermasse zu 20 bis 80 Gew.-% Salz und zu 20 bis 80 Gew.-% Fasern umfasst.

8. Verfahren für die Herstellung einer Bouillontablette nach einem der Ansprüche 1 bis 7, wobei die Bouillontablette zu zwischen 20 und 75 Gew.-% die Salzfasermasse umfasst.

9. Verfahren für die Herstellung einer Bouillontablette nach einem der Ansprüche 1 bis 8, wobei das Trocknen durch Ofentrocknen, Lufttrocknen, Trommeltrocknen, Vakuumtrocknen, Betttrocknen, Mikrowellenvakuumtrocknen, Infrarotstrahlungstrocknen oder Kombinationen davon erfolgt.

10. Verfahren für die Herstellung einer Bouillontablette nach einem der Ansprüche 1 bis 9, wobei die trockene Zusammensetzung eine Fließfähigkeit von mindestens 2,5 bei 23 °C aufweist und wobei die Fließfähigkeit unter Verwendung einer Schulze-Ringscherprüfvorrichtung RST-01.pc gemäß ASTM D6467 gemessen wurde, wobei eine Vorschernormalspannung auf 2600 Pa und eine Schernormalspannung auf 390, 1235 und 2080 Pa eingestellt wurde.

11. Verfahren für die Herstellung einer Bouillontablette nach einem der Ansprüche 1 bis 10, wobei die Bouillontablette eine Tablettenhärte von mindestens 90 N aufweist und wobei die Härtemessung unter Verwendung eines Texturanalysators TA-HDplus, der mit einer 250 kg-Wägezelle und einer P/75-Kompressionsplatte ausgestattet ist, ausgeführt wurde.

## Revendications

1. Procédé de production d'un cube de bouillon comprenant du sel et des fibres, le procédé comprenant les étapes consistant à :
a) dissoudre le sel ou une partie du sel dans de l'eau ;
b) mélanger les fibres et l'eau avant, pendant ou après la dissolution du sel ou d'une partie du sel dans de l'eau ;
c) sécher le mélange de l'étape b) pour obtenir une masse sèche de sel et de fibres ;
d) broyer la masse sèche de sel et de fibres ;
e) mélanger la masse sèche de sel et de fibres avec au moins un autre ingrédient choisi dans le groupe constitué de sel, de sucre, de GMS, d'arômes, de colorants, d'agents de remplissage, d'huile, de graisse ou quelconque combinaison de ceux-ci, pour obtenir une composition sèche ;
f) presser la composition sèche pour obtenir un cube de bouillon ;
dans lequel le sel est dissous dans l'eau dans un rapport compris entre 1:2,8 et 1:20 ; et dans lequel le séchage est réalisé à une température comprise entre 65 et 120 °C ; et dans lequel le cube de bouillon comprend au moins 10 % en poids de masse de sel et de fibres ; et
dans lequel la masse de sel et de fibres comprend de 10 à 90 % en poids de sel et de 10 à 90 % en poids de fibres.

2. Procédé de production d'un cube de bouillon selon la revendication 1, dans lequel la fibre est une fibre alimentaire.

3. Procédé de production d'un cube de bouillon selon l'une quelconque des revendications 1 à 2, dans lequel la fibre est choisie parmi au moins une carotte, une betterave, une citrouille, un agrume, du blé, de l'avoine, du bambou, une tomate, un poivron, un poireau, du gingembre, un oignon, un chou frisé, un panais, un céleri, un concombre, une courgette, un brocoli, un chou-rave, une asperge ou une combinaison de ceux-ci.

4. Procédé de production d'un cube de bouillon selon l'une quelconque des revendications 1 à 3, dans lequel le cube de bouillon comprend entre 10 et 65 % en poids de sel.

5. Procédé de production d'un cube de bouillon selon l'une quelconque des revendications 1 à 4, dans lequel une partie du sel de l'étape a) est au moins 8 % en poids de la quantité totale de sel comprise dans le cube de bouillon, de préférence au moins 12 % en poids.

6. Procédé de production d'un cube de bouillon selon l'une quelconque des revendications 1 à 5, dans lequel les fibres de l'étape b) sont mélangées après dissolution du sel dans l'eau.

7. Procédé de production d'un cube de bouillon selon l'une quelconque des revendications 1 à 6, dans lequel la masse de sel et de fibres comprend de 20 à 80 % en poids de sel et de 20 à 80 % en poids de fibres.

8. Procédé de production d'un cube de bouillon selon l'une quelconque des revendications 1 à 7, dans lequel le cube de bouillon comprend entre 20 et 75 % en poids de la masse de sel et de fibres.

9. Procédé de production d'un cube de bouillon selon l'une quelconque des revendications 1 à 8, dans lequel le séchage est réalisé par séchage au four, séchage à l'air, séchage par tambour, séchage sous vide, séchage en lit, séchage par micro-ondes sous vide, séchage par rayonnement infrarouge ou des combinaisons de ceux-ci.

10. Procédé de production d'un cube de bouillon selon l'une quelconque des revendications 1 à 9, dans lequel la composition sèche a une fluidité d'au moins 2,5 à 23 °C et dans lequel la fluidité a été mesurée à l'aide d'un testeur de cisaillement à anneau Schulze RST-01.pc, selon la norme ASTM D6467, avec une contrainte normale de pré-cisaillement réglée à 2600 Pa et une contrainte normale de cisaillement réglée à 390, 1235 et 2080 Pa.

11. Procédé de production d'un cube de bouillon selon l'une quelconque des revendications 1 à 10, dans lequel le cube de bouillon a une dureté de cube d'au moins 90 N, et dans lequel la mesure de dureté a été effectuée à l'aide de l'analyseur de texture TA-HDplus équipé d'un capteur de 250 kg et d'un plateau de compression P/75.
